# EUROPEAN PATENT APPLICATION

(11) **EP 3 745 195 A1**
(43) Date of publication of application: **02.12.2020**
(21) Application number: 20174514.8
(22) Date of filing: 13.05.2020
(51) Int. Cl.: G03B 15/03, G01B 11/25, H04N 5/232

(54) **DEPTH CAMERAS, ELECTRONIC DEVICES, AND METHODS FOR IMAGE ACQUISITION**

(30) Priority: 24.05.2019 CN 201910437664
(71) Applicant: GUANGDONG OPPO MOBILE TELECOMMUNICATIONS CORP., LTD., Wusha, Chang'an Dongguan, Guangdong 523860 (CN)
(72) Inventor: XU, Naijiang, Dongguan, Guangdong 523860 (CN)
(74) Representative: Manitz Finsterwald Patent- und Rechtsanwaltspartnerschaft mbB

(57) **Abstract**

The disclosure provides a depth camera, an electronic device, and a method for image acquisition. The depth camera includes a laser projector, an image collector, a first storage area, a second storage area, and a logic subtraction circuit. The image collector includes an image sensor. The image sensor is configured to execute a plurality of exposure operations. The image controller is configured to acquire a plurality of collected images. The plurality of collected images include a first image acquired when the laser projector is not projecting the laser light and a second image acquired when the laser projector is projecting the laser light. The logic subtraction circuit is configured to process the first image and the second image to acquire a third image, the third image for calculating a depth image.

## Description

### TECHNICAL FIELD

The disclosure relates to the field of imaging technologies, and more particularly, to a depth camera, an electronic device, and a method for image acquisition.

### BACKGROUND

A depth camera may acquire depth information of a scene by projecting a laser pattern with speckle(s) onto the scene. In detail, the depth camera may project infrared laser light (for example, the infrared laser light of 940 nm) onto the scene, the infrared laser light may form a speckle pattern, and the depth camera may collect a speckle pattern reflected by object(s) in the scene to acquire depth information of the object(s) in the scene. However, when the depth camera is utilized in a scene with a high brightness, such as an outdoor scene with bright sunlight, ambient light at this time contains a large amount of infrared light of 940 nm. This portion of the infrared light may enter the depth camera for imaging, which makes a brightness of speckle pattern imaging close to a brightness of ambient infrared light imaging, such that it is difficult for algorithms to distinguish laser speckle(s), resulting in matching failure of laser speckle(s) and partial or complete loss of depth information.

### SUMMARY

The depth camera according to embodiments of the disclosure includes a laser projector, an image collector, a first storage area, a second storage area, and a logic subtraction circuit. The laser projector is configured to project laser light onto a scene. The image collector includes an image sensor. The image sensor is configured to execute a plurality of exposure operations. The image controller is configured to acquire a plurality of collected images corresponding to the plurality of exposure operations. The plurality of collected images include a first image acquired when the laser projector is not projecting the laser light and a second image acquired when the laser projector is projecting the laser light. The first storage area is configured to store the first image. The second storage area is configured to store the second image. The logic subtraction circuit is configured to process the first image and the second image to acquire a third image, the third image configured for calculating a depth image.

In at least one embodiment, the first storage area, the second storage area, and the logic subtraction circuit are configured inside the image sensor.

In at least one embodiment, the image collector further includes a circuit board. The image sensor is disposed on the circuit board. The first storage area, the second storage area, and the logic subtraction circuit are configured outside the image sensor and packaged with the image sensor on the circuit board.

In at least one embodiment, the image sensor is further configured to receive a first instruction, and execute the plurality of exposure operations in response to receiving the first instruction, the first instruction being configured to indicate that a brightness of the scene is greater than a threshold and a type of the scene meets a preset type.

In at least one embodiment, the image sensor is further configured to receive a second instruction, and execute one exposure operation in response to receiving the second instruction, the second instruction being configured to indicate that the brightness of the scene is less than or equal to the threshold and the type of the scene does not meet the preset type.

In at least one embodiment, the image sensor is further configured to generate a strobe signal based on an acquisition timing of the image sensor when the image sensor executes an exposure operation for a first time, and control a projection timing of the laser projector for projecting the laser light based on the strobe signal.

In at least one embodiment, the first image and the second image are acquired after the image sensor executes two consecutive exposure operations.

The electronic device according to embodiments of the disclosure includes a housing, the depth camera as described above and a processor. The depth camera is combined with the housing. The processor is configured to calculate the depth image based on the third image and a reference image.

In at least one embodiment, the first storage area, the second storage area, and the logic subtraction circuit are configured inside the processor.

In at least one embodiment, the electronic device further includes a visible-light camera, configured to collect a visible-light image in response to receiving a synchronization signal from the image sensor.

In at least one embodiment, the electronic device further includes a flood light, in which the image sensor is further configured to generate a second strobe signal based on an acquisition timing of the image sensor, and control an emission timing of the flood light for emitting light based on the second strobe signal.

The method for image acquisition according to embodiments of the disclosure is applicable for a depth camera and includes: acquiring and storing a first image when laser light is not projected; acquiring and storing a second image when the laser light is projected; and performing a subtraction on the first image and the second image to acquire a third image, the third image for calculating a depth image.

In at least one embodiment, the method further includes: generating a first strobe signal based on an acquisition timing; and alternating between projecting and not projecting the laser light based on the first strobe signal.

In at least one embodiment, the method further includes: determining whether an ambient brightness is greater than a threshold and an ambient type meets a preset type; acquiring and storing the first image and the second image, in response to a determination that that the ambient brightness is greater than the threshold and the ambient type meets the preset type; and in response to a determination that at least one of that the ambient brightness is less than or equal to the threshold or the ambient type does not meet the preset type, acquiring and storing the second image, and taking the second image as the third image.

In at least one embodiment, the first image and the second image are acquired at two consecutive exposure operations.

Additional aspects and advantages of embodiments of the disclosure will be described in part in the following descriptions, or become apparent in part from the following descriptions, or be learned from the practice of the embodiments of the disclosure.

### BRIEF DESCRIPTION OF DRAWINGS

The above and/or additional aspects and advantages of embodiments of the disclosure will become apparent and more readily appreciated from the following descriptions made with reference to the drawings, in which:
FIGS. 1 and 2 are schematic diagrams of an electronic device according to some embodiments of the disclosure.
FIG. 3 is a schematic diagram of a system architecture of an electronic device according to some embodiments of the disclosure.
FIG. 4 is a circuit schematic diagram under a case that a first storage area, a second storage area, and a logic subtraction circuit are configured inside an image sensor, according to some embodiments of the disclosure.
FIG. 5 is a working timing diagram of a laser projector and an image collector according to some embodiments of the disclosure.
FIG. 6 is a working timing diagram of a laser projector and an image collector according to some embodiments of the disclosure.
FIG. 7 is a circuit schematic diagram of under a case that a first storage area, a second storage area, and a logic subtraction circuit are configured outside an image sensor and packaged with the image sensor, according to some embodiments of the disclosure.
FIG. 8 is a circuit schematic diagram of under a case that a first storage area, a second storage area, and a logic subtraction circuit are configured inside a processor, according to some embodiments of the disclosure.
FIGS. 9 and 10 are flowcharts of an image acquisition method according to some embodiments of the disclosure.
FIG. 11 is a schematic diagram of an interaction between a non-volatile computer-readable storage medium and a processor according to some embodiments of the disclosure.

### DETAILED DESCRIPTION

Embodiments of the disclosure will be described in detail and examples of the embodiments are illustrated in the drawings. The same or similar elements and the elements having the same or similar functions are denoted by like reference numerals throughout the descriptions. Embodiments described herein with reference to the drawings are explanatory, serve to explain the disclosure, and are not construed to limit the embodiments of the disclosure.

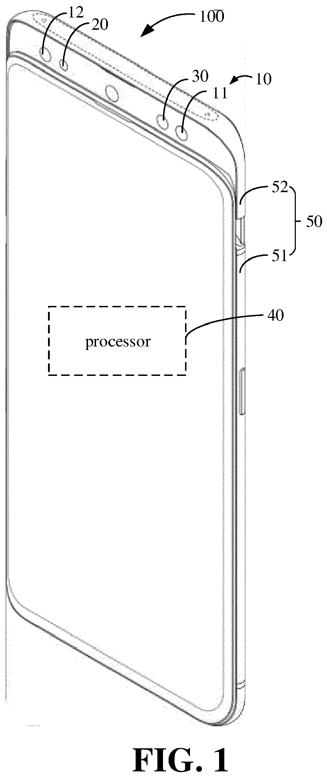

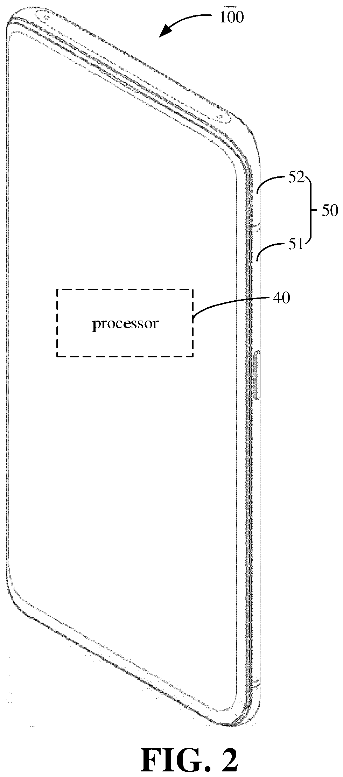

As illustrated in FIGS. 1 to 3, the disclosure provides an electronic device 100. The electronic device 100 may be a mobile phone, a tablet computer, a notebook computer, a smart wearable device (e.g., a smart watch, a smart bracelet, a smart helmet, and smart glasses), a virtual reality device, and the like. The disclosure is illustrated by taking a mobile phone as an example of the electronic device 100, but the electronic device 100 is not limited to the mobile phone. The electronic device 100 may include a depth camera 10, a flood light 20, a visible-light camera 30, a processor 40, and a housing 50.

The processor 40 is received in the housing 50. The depth camera 10, the flood light 20 and the visible-light camera 30 are all mounted on the housing 50. In an example, the housing 50 may include a main body 51 and a movable bracket 52. The movable bracket 52 may be moved relatively to the main body 51, under a driving of a driving device. For example, the movable bracket 52 may slide relatively to the main body 51 to slide into or out of the main body 51. The depth camera 10, the flood light 20, and the visible-light camera 30 may all be mounted on the movable bracket 52. The movement of the movable bracket 52 may cause the depth camera 10, the flood light 20, and the visible-light camera 30 to retract into or extend from the main body 51. The housing 50 is provided with one or more acquisition windows. The acquisition windows may be opened on the front or rear of the housing 50. The depth camera 10, the flood light 20 and the visible-light camera 30 are all aligned with the acquisition windows, such that the depth camera 10 and the visible-light camera 30 are capable of receiving light incident from the acquisition windows, and light emitted by the flood light 20 may be emitted from the acquisition windows. When the user needs to utilize any one of the depth camera 10, the flood light 20 and the visible-light camera 30, the movable bracket 52 is triggered to slide out from the main body 51 to drive the depth camera 10, the flood light 20 and the visible-light camera 30 to extend from the main body 51. When the user does not need to utilize the depth camera 10, the flood light 20 and the visible-light camera 30, the movable bracket 52 is triggered to slide into the main body 51 to drive the depth camera 10, the flood light 20 and the visible-light camera 30 to retract into the main body 51. In another example, the housing 50 is provided with one or more through holes. The depth camera 10, the flood light 20 and the visible-light camera 30 are installed in the housing 50 and aligned with the through holes. The through holes may be opened on the front or rear of the housing 50. The depth camera 10 and the visible-light camera 30 may receive light passing through the through holes. The light emitted by the flood light 20 may be emitted through the through holes.

The depth camera 10 may include a laser projector 11 and an image collector 12. The laser projector 11 is configured to project laser light onto a scene. The laser projector 11 may include a laser-light source 111 and a first driver 112. The first driver 112 is configured to drive the laser-light source 111 to project the laser light. The laser light may be infrared laser light or other invisible-light, such as ultraviolet laser light. The image collector 12 may include an image sensor 121. When the image sensor 121 is exposed, the image sensor 121 receives light reflected by object(s) to generate a collected image. In an embodiment of the disclosure, the image sensor 121 may be a CMOS (Complementary Metal-Oxide-Semiconductor Transistor) sensor. In addition, the disclosure is illustrated by taking the infrared laser light as an example of the laser light and taking an infrared camera as an example of the image collector 12, but the laser light and the image collector 12 are not limited thereto. For example, the laser light may also be ultraviolet laser light, and the image collector 12 may be an ultraviolet-light camera. The laser projector 11 and the image collector 12 are both coupled to the processor 40. The processor 40 may provide an enable signal to the laser projector 11. In detail, the processor 40 may provide the enable signal to the first driver 112. The image collector 12 may be coupled to the processor 40 through an I2C (Inter-Integrated Circuit) bus. When the depth camera 10 is working, the image collector 12 operates cooperatively with the laser projector 11 through a strobe signal. The strobe signal may be regarded as an electrical signal having high and low level periods appearing alternately, which is generated based on an acquisition timing of the image collector 12 acquiring collected images. The strobe signal is configured to control the laser projector 11 to project the laser light by a projection timing indicated by the strobe signal. In detail, the processor 40 sends an image acquisition instruction for acquiring a depth image to the image collector 12 through the I2C bus. In response to receiving the image acquisition instruction, the image collector 12 controls a switch device 61 through the strobe signal. If a high level appears in the strobe signal, the switch device 61 sends a first pulse signal (pwnl) to the first driver 112, and the first driver 112 drives the laser-light source 111 to project the laser light onto the scene based on the first pulse signal. If a low level appears in the strobe signal, the switch device 61 stops sending the first pulse signal to the first driver 112, and the laser-light source 111 does not project the laser light. Or, if a low level appears in the strobe signal, the switch device 61 sends a first pulse signal to the first driver 112, and the first driver 112 drives the laser-light source 111 to project the laser light onto the scene based on the first pulse signal. If a high level appears in the strobe signal, the switch device 61 stops sending a first pulse signal to the first driver 112, and the laser-light source 111 does not project the laser light.

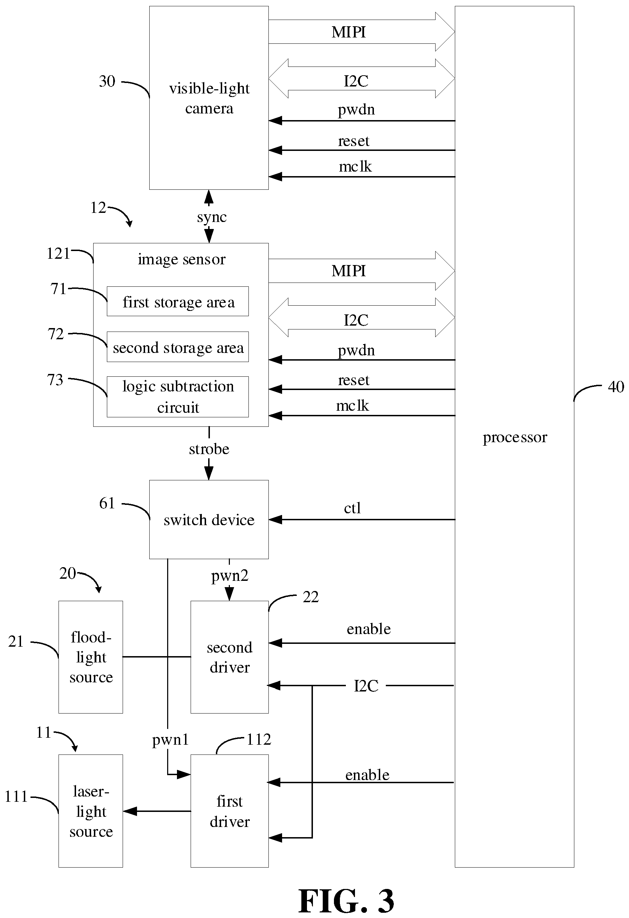

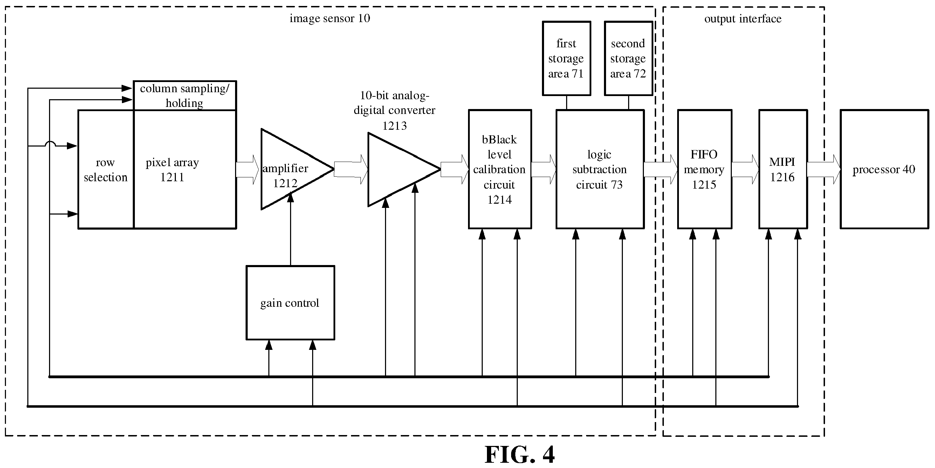

The depth camera 10 may further include a first storage area 71, a second storage area 72, and a logic subtraction circuit 73. In an example, the first storage area 71, the second storage area 72, and the logic subtraction circuit 73 are all disposed inside the image sensor 121. In detail, as illustrated in FIGS. 3 and 4, the image sensor 121 may include a pixel array 1211, an amplifier 1212, a 10-bit analog-digital converter 1213, a black level calibration circuit 1214, the logic subtraction circuit 73, the first storage area 71, the second storage area 72, a First Input First Output (FIFO) memory 1215, and a Mobile Industry Processor Interface (MIPI) 1216. The pixel array 1211, the amplifier 1212, the 10-bit analog-digital converter 1213, the black level calibration circuit 1214, the logic subtraction circuit 73, the FIFO memory 1215 and the MIPI 1216 are coupled in sequence. The first storage area 71 and the second storage area 72 both are coupled to the logic subtraction circuit 73. In another example, the first storage area 71, the second storage area 72, and the logic subtraction circuit 73 are all disposed outside the image sensor 121 and packaged with the image sensor 121 (not illustrated). The laser projector 11 is configured to project laser light onto a scene. The image sensor 121 is configured to execute a plurality of exposure operations to acquire a plurality of collected images. The plurality of collected images include a first image acquired when the laser projector 11 is not projecting the laser light and a second image acquired when the laser projector 11 is projecting the laser light. The first storage area 71 is configured to store the first image. The second storage area 72 is configured to store the second image. The logic subtraction circuit 73 is configured to process the first image and the second image to acquire a third image, the third image for calculating a depth image.

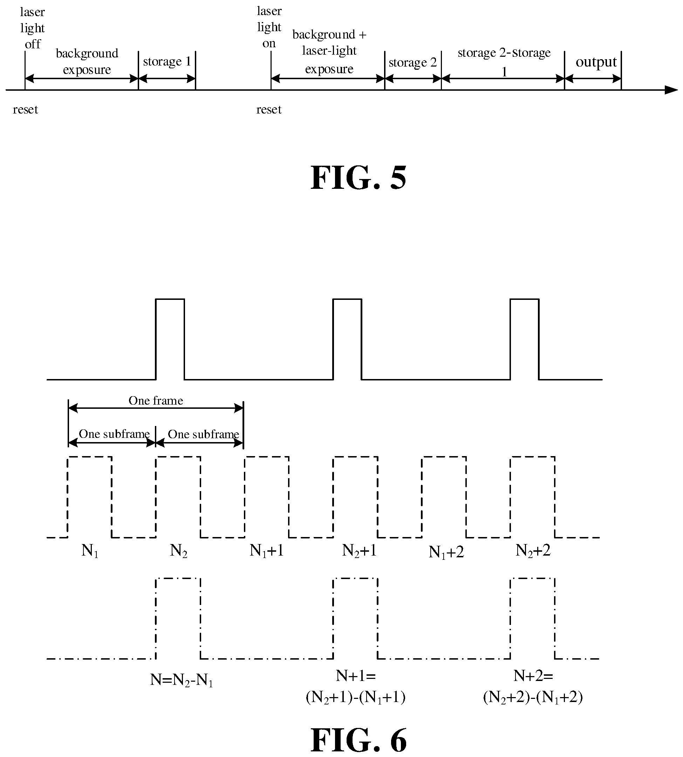

As illustrated in FIGS. 3, 5 and 6, in an example, the processor 40 sends an image acquisition instruction to the image sensor 121, and simultaneously sends a reset signal (reset) to the image collector 12 to reset the image collector 12. The image sensor 121 starts exposure after receiving the image acquisition instruction, meanwhile the image sensor 121 generates a strobe signal based on an acquisition timing of acquiring images itself at the start time of the first exposure and sends the strobe signal to the switch device 61. The switch device 61 provides a first pulse signal to the first driver 112 based on a change timing of high and low levels of the strobe signal, such that the first driver 112 controls the laser-light source 111 to project the laser light based on a projection timing indicated by the strobe signal. The image sensor 121 sends the strobe signal to the switch device 61 at the start time of the first exposure, and does not need to send the strobe signal to the switch device 61 at each exposure, such that the control logic is relatively simple. As illustrated in FIG. 6, solid lines, dotted lines, and chain lines are arranged in order from top to bottom, in which the solid lines represent the projection timing of the laser projector 11, the dotted lines represent the acquisition timing at which the image collector 12 acquires collected images and the number of collected images, and the chain lines represent the number of the third images acquired based on the first images and the second images. In the initial state, the laser projector 11 does not project the laser light, and the image sensor 121 is in an unexposed state after resetting. The image sensor 121 receives infrared light in the environment (hereinafter referred to as ambient infrared light) to acquire an N₁^{th} collected image (e.g., a background exposure process in FIG. 5; at this time, the N₁^{th} collected image is a first image, also called a background image), and store the N₁^{th} collected image into the first storage area 71 (e.g., storage 1 in FIG. 5). The processor 40 resets the image sensor 121 again; meanwhile the laser projector 11 starts projecting the laser light. The image sensor 121 receives ambient infrared light and the infrared laser light projected by the laser projector 11 to acquire an N₂^{th} collected image (e.g., a background + laser-light exposure process in FIG. 5; at this time, the N₂^{th} collected image is a second image, also called an interference speckle image), and store the N₂^{th} collected image into the second storage area 72 (e.g., storage 2 in FIG. 5). The logic subtraction circuit 73 reads the N₁^{th} collected image from the first storage area 71, reads the N₂^{th} collected image from the second storage area 72, and performs subtraction processing on the N₁^{th} collected image and the N₂^{th} collected image to acquire a N^{th} collected image (e.g., a process of storage 2-storage 1 in FIG. 5, and the N^{th} collected image is a third image). The image sensor 121 acquires the N^{th} collected image from the logic subtraction circuit 73 and sends the N^{th} collected image to the processor 40 through the MIPI (e.g., an output process in FIG. 5). Subsequently, the image sensor 121 is reset, meanwhile the working state of the laser projector 11 becomes a state in which the laser light is not projected. The image sensor 121 receives ambient infrared light to acquire an (N₁+1)^{th} collected image (the first image), and the (N₁+1)^{th} collected image is stored into the first storage area 71. Subsequently, the processor 40 resets the image sensor 121 again, meanwhile the laser projector 11 starts to project the laser light. The image sensor 121 receives ambient infrared light and the infrared laser light projected by the laser projector 11 to acquire an (N₂+1)^{th} collected image (the second image at this time), and the (N₂+1)^{th} collected image is stored into the second storage area 72. The logic subtraction circuit 73 reads the (N₁+1)^{th} collected image from the first storage area 71, reads the (N₂+1)^{th} collected image from the second storage area 72, and acquires the (N+1)^{th} collected image (e.g., the third image) by performing subtraction process on the (N₁+1)^{th} collected image and the (N₂+1)^{th} collected image. The image sensor 121 acquires the (N+1)^{th} collected image from the logic subtraction circuit 73 and sends the (N+1)^{th} collected image to the processor 40 through the MIPI. Likewise, the processor 40 may receive a plurality of third images. After receiving each third image, the processor 40 may calculate the depth image based on this third image and the reference image pre-stored in the processor 40.

It should be noted that, in some embodiments, the image collector 12 may also perform acquisition of the collected images at the same time during the process of sending the third image to the processor 40. In addition, the image collector 12 may first acquire the second image, and then acquire the third image, and alternately perform acquisition of the collected images base on this order.

It may be understood that the ambient light includes infrared light having the same wavelength as the infrared laser light projected by the laser projector 11 (for example, ambient infrared light of 940 nm). When the image collector 12 acquires the collected images, this portion of the infrared light is also received by the image collector 12. When the brightness of the scene is high, the proportion of the ambient infrared light in the light received by the image collector 12 increases, resulting in inconspicuous laser speckle(s) in the collected image, which affects the calculation of the depth image.

The image acquisition method provided in the disclosure controls the laser projector 11 to alternately perform an operation of projecting the laser light and an operation of not projecting the laser light, and controls the image collector 12 to acquire the first image generated by the ambient infrared light and the second image generated by the infrared laser light projected by the laser projector 11 and the ambient infrared light, and remove the image portion generated by the ambient infrared light in the second image based on the first image, thereby acquiring the third image generated by the infrared laser light projected by the laser projector 11. The third image may easily distinguish laser speckle(s), without affecting laser speckle matching, which may avoid partial or complete loss of depth information, thereby improving the accuracy of the depth image.

In an embodiment of the disclosure, the first image and the second image utilized to calculate the third image are acquired by two consecutive exposures performed by the image sensor 121. As illustrated in FIG. 6, the N^{th} third image is acquired based on the N₁^{th} first image and the N₂^{th} second image acquired by the two consecutive exposures. In this way, the amount of ambient infrared light in the N₁^{th} first image and the amount of ambient infrared light in the N₂^{th} second image are relatively consistent. The ratio of the ambient infrared light in the N^{th} third image acquired based on the N₁^{th} first image and the N₂^{th} second image acquired by the two consecutive exposures is reduced.

In some embodiments, a plurality of pixel points of the first image correspond to a plurality of pixel points in the second image in a one-to-one relationship. The subtraction of the first image and the second image refers to the subtraction of a pixel value of pixel point P1_{i,j} in the first image and a pixel value of pixel point P2_{i,j} in the second image. In other words, a pixel value of pixel point P3_{i,j} in the third image is calculated by a formula of: P3_{i,j}=P2_{i,j}-P1_{i,j}, i ∈ N+, j∈N+.

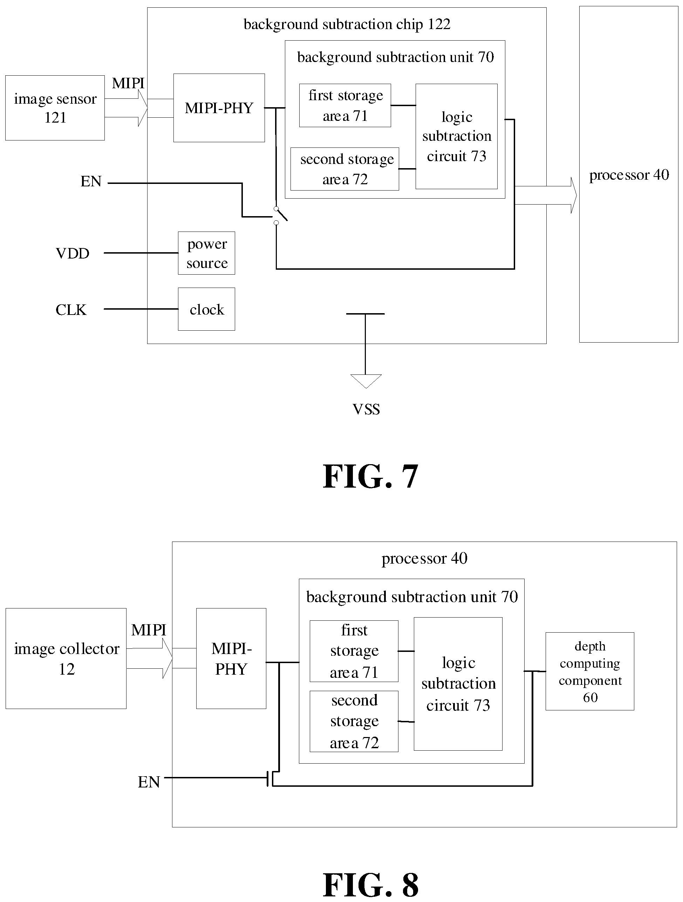

In some embodiments, the first storage area 71, the second storage area 72, and the logic subtraction circuit 73 are all disposed outside the image sensor 121 and packaged with the image sensor 121. In detail, the image collector 12 further includes a circuit board. The image sensor 121 is disposed on the circuit board. As illustrated in FIG. 7, when the first storage area 71, the second storage area 72, and the logic subtraction circuit 73 are provided outside the image sensor 121, the first storage area 71, the second storage area 72, and the logic subtraction circuit 73 are configured as one background subtraction chip 122 (e.g., to remove interference of the ambient infrared light). Both the background subtraction chip 122 and the image sensor 121 are disposed on the circuit board (not illustrated), such that the enable signal (EN) may be configured to control the work status of the background subtraction chip 122. The signal output by the image sensor 121 after exposure is output to the background subtraction chip 122 through the MIPI. The background subtraction chip 122 may output the signal acquired after the background subtraction processing to the processor 40 through the MIPI. At this time, the image sensor 121 performs the exposure operation, and the first storage area 71, the second storage area 72, and the logic subtraction circuit 73 may be as additional circuits to be combined with the existing image sensor 121 without significantly changing the circuit design of the existing image sensors 121, which is helpful for simplifying manufacturing of the image collector 12.

When the first storage area 71, the second storage area 72, and the logic subtraction circuit 73 are all disposed inside the image collector 12, the image collector 12 outputs one frame after two exposures. In other words, the image collector 12 works at different exposure frame rate and output frame rate, in which the exposure frame rate is greater than the output frame rate (as illustrated in FIG. 6, the image collector 12 exposes twice for two images and outputs one image). When the first storage area 71, the second storage area 72, and the logic subtraction circuit 73 are all disposed inside the image collector 12, since the subtraction of the first image and the second image is performed in the image collector 12, the processing calculation load and power consumption of the processor 40 are reduced.

In some embodiments, the logic subtraction circuit 73 may calculate a plurality of third images, such as the N^{th} third image, the (N+1)^{th} third image, and the (N+2)^{th} third image as illustrated in FIG. 6. The logic subtraction circuit 73 may send the plurality of third images to the processor 40. The processor 40 calculates a plurality of depth images based on the plurality of third images. Certainly, in other embodiments, the logic subtraction circuit 73 may also calculate one third image. The processor 40 may calculate one depth image based on the third image. The number of the third images may be determined based on the security level of the application scenario. In detail, when the security level of the application scenario is high, for example, for the application scenario with a high security level such as payment, the number of the third images should be large. At this time, it is necessary to successfully match the plurality of depth images with a depth template of the user to perform the payment action, so as to improve the security of the payment. For the application scenario with a low security level, for example, for the application of portrait beauty based on depth information, the number of the third images may be less, for example, one image. At this time, one depth image is enough for portrait beauty. In this way, the calculation amount and power consumption of the image collector 12 and the processor 40 may be reduced, and the speed of image processing may be improved.

In some embodiments, the flood light 20 may include a flood-light source 21 and a second driver 22. The second driver 22 may drive the flood-light source 21 to emit uniform surface light onto the scene. The light emitted by the flood light 20 may be infrared light or other invisible-light, such as ultraviolet light. In the disclosure, the infrared light emitted by the flood light 20 is taken as an example for description, but the light emitted by the flood light 20 is not limited thereto. The flood light 20 is coupled to the processor 40. The processor 40 may provide an enable signal to the flood light 20. In detail, the processor 40 may provide the enable signal to the second driver 22. The flood light 20 may work with the image collector 12 to acquire infrared images. When the flood light 20 is utilized in combination with the image collector 12, the image collector 12 may generate a strobe signal (which is an independent strobe signal from the strobe signal used to control the laser projector 11 by the image collector 12) based on the acquisition timing of acquiring the infrared images itself, and the flood light 20 is controlled by the strobe signal to emit infrared light based on an emission timing indicated by the strobe signal. In detail, the processor 40 may send an image acquisition instruction for acquiring an infrared image to the image collector 12 through the I2C bus. After the image collector 12 receives the image acquisition instruction, the switch device 61 is controlled by the strobe signal. If a high level appears in the strobe signal, the switch device 61 sends a second pulse signal (pwn2) to the second driver 22, and the second driver 22 drives the flood-light source 21 to emit the infrared light based on the second pulse signal. If a low level appears in the strobe signal, the switch device 61 stops sending the second pulse signal to the second driver 22, and the flood-light source 21 does not emit the infrared light. Or, if a low level appears in the strobe signal, the switch device 61 sends the second pulse signal to the second driver 22, and the second driver 22 controls the flood-light source 21 to emit the infrared light based on the second pulse signal. If a high level appears in the strobe signal, the switch device 61 stops sending the second pulse signal to the second driver 22, and the flood-light source 21 does not emit the infrared light. When the flood light 20 emits the infrared light, the image collector 12 receives the infrared light reflected by the object(s) in the scene to generate an infrared image, and sends the infrared image to the processor 40 through the MIPI. The infrared image is usually used for iris recognition, face recognition, and the like. Similarly, the image collector 12 sends the strobe signal to the switch device 61 during the first exposure, and does not need to send the strobe signal to the switch device 61 during each exposure, and the control logic is relatively simple.

Further, when the image collector 12, the laser projector 11, and the flood light 20 are used together, the image collector 12 generates two strobe signals based on the acquisition timing of acquiring images (including collected images and infrared images) itself, in which one strobe signal is used to control the laser projector 11 to project the laser light based on the projection timing indicated by the strobe signal, and the other strobe signal is used to control the flood light 20 to emit the infrared light based on the emission timing indicated by the strobe signal. The two strobe signals cause the state of the laser projector 11 to project the laser light and the state of the flood light 20 to emit the infrared light to be staggered. Meanwhile, the image collector 12 may collect the first image, the second image, and the infrared image (the acquisition order of the three is not limited), so that the third image generated by the laser light projected by the laser projector 11, and the infrared image generated by the ambient infrared light and the infrared light emitted by the flood light 20 may be acquired. The third image is configured to calculate the depth image. The depth image may be configured to match the depth template. The infrared image may be configured to match the infrared template.

In some embodiments, the visible-light camera 30 is coupled to the processor 40 through the I2C bus. The visible-light camera 30 is configured to acquire a visible-light image. The visible-light camera 30 may be used alone or in combination with the depth camera 10. In an example, when the first storage area 71, the second storage area 72, and the logic subtraction circuit 73 are all disposed inside the image collector 12, the image collector 12 is exposed twice during the acquisition of one collected image (for example, exposed twice to acquire the first image and the second image), but the output collected image is one, and the image collector 12 may achieve the effect of subtracting the background without changing its output frame rate. At this time, the image collector 12 may perform hardware synchronization with the visible-light camera 30 through a synchronization signal (sync). In detail, when the visible-light camera 30 and the depth camera 10 are used together, the processor 40 may send the image acquisition instruction to the image collector 12 through the I2C bus. After receiving the image acquisition instruction, the image collector 12 starts to expose, and through the strobe signal, controls the first driver 112 to send the first pulse signal to the switch device 61. Meanwhile, the image collector 12 also synchronizes with the visible-light camera 30 through the sync signal. In detail, the image collector 12 sends the sync signal to the visible-light camera 30. The visible-light camera 30 starts collecting visible-light images after receiving the sync signal.

In some embodiments, as illustrated in FIG. 8, the first storage area 71, the second storage area 72, and the logic subtraction circuit 73 are all disposed inside the processor 40. In detail, the first storage area 71, the second storage area 72 and the logic subtraction circuit 73 are provided inside the processor 40 as a background subtraction unit 70, the working state of which is controlled by the enable signal (EN). When the depth camera 10 is operating, the first image collected by the image collector 12 is sent to the first storage area 71 through the MIPI for storage, and the second image is sent to the second storage area 72 through the MIPI for storage. The logic subtraction circuit 73 reads the first image from the first storage area 71, reads the second image from the second storage area 72, and performs the subtraction operation on the first image and the second image to finally acquire the third image. The processor 40 is further provided with a depth computing component 60 (for example, an application specific integrated circuit (ASIC) dedicated to calculating depth). The depth computing component 60 is coupled to the logic subtraction circuit 73. The logic subtraction circuit 73 may send the third image to the depth computing component 60, in order to facilitate the depth computing component 60 to calculate the depth image based on the third image and the reference image.

When the first storage area 71, the second storage area 72, and the logic subtraction circuit 73 are all disposed inside the processor 40, if the visible-light camera 30 and the depth camera 10 are used together, the visible-light camera 30 outputs one visible-light image to the processor 40, meanwhile the image collector 12 outputs two collected images to the processor 40. In detail, the image collector 12 outputs one first image to the processor 40 and outputs one second image to the processor 40. In this case, the visible-light camera 30 and the depth camera 10 cannot perform hardware synchronization through the sync signal. At this time, the visible-light camera 30 and the image collector 12 may be synchronized by software. In detail, the processor 40 may acquire the acquisition time of each visible-light image and the acquisition time of each second image, and determine the frame-synchronized visible-light image and second image based on the acquisition time of the visible-light image and the acquisition time of the second image. The acquisition time of each visible-light image may be a start time, an end time, or any time between the start time and the end time of the visible-light camera 30 acquiring the visible-light image. The acquisition time of each second image may be a start time, an end time, or any time between the start time and the end time of the image collector 12 acquiring the second image. Frame synchronization refers to that a difference between the determined acquisition time of the second image and the determined acquisition time of the visible-light image is less than a preset time difference, and the acquisition time of the visible-light image may be before or after the acquisition time of the second image. The visible-light image and the second image may be used for 3-dimensional color modeling of a scene or an object, and the frame-synchronized visible-light image and second image for 3-dimensional color modeling may improve the accuracy of the modeled object or scene.

In some embodiments, the processor 40 may first acquire a brightness of the scene and a type of the scene. The depth camera 10 may perform the operation of acquiring the first image and the second image when the brightness is greater than a brightness threshold and the type is an outdoor scene. The brightness of the scene may be acquired by analyzing the image acquired by the image collector 12 when the laser projector 11 is not projecting the laser light and the flood light 20 does not emit the infrared light, or by analyzing the visible-light image acquired by the visible-light camera 30. Or, the brightness of the scene may also be directly detected by the light sensor, and the processor 40 reads the detected signal from the light sensor to acquire the brightness of the scene. The type of scene may be acquired by analyzing the image acquired by the image collector 12 when the laser projector 11 is not projecting the laser light or the visible-light image acquired by the visible-light camera 30. For example, it is determined whether the type of the scene is an outdoor scene or an indoor scene by analyzing object(s) in the image acquired by the image collector 12 when the laser projector 11 is not projecting the laser light or object(s) in the visible-light image acquired by the visible-light camera 30. The type of the scene may also be determined directly based on the geographic location. In detail, the processor 40 may acquire the positioning result of the scene by a global satellite positioning system, and further determine the type of the scene based on the positioning result. For example, if the positioning result is an office building, it is indicated that the scene is the indoor scene; if the positioning scene is a park, the scene is the outdoor scene; and if the positioning scene is a certain street, the scene is the outdoor scene.

It is understood that when the brightness of the scene is high (for example, the brightness is greater than the brightness threshold), the proportion of ambient infrared light in the collected image is large, and the recognition of speckle(s) is greatly affected. At this time, the interference of ambient infrared light needs to be removed. However, when the brightness of the scene is low, the proportion of ambient infrared light in the collected image is small, and the impact on the recognition of speckle(s) is small and may be ignored. At this time, the image collector 12 may directly acquire the second image, and the processor 40 directly calculates the depth image based on the second image and the reference image. In addition, when the brightness of the scene is high, it may be caused by strong indoor light emitted by the lamp. Since the light emitted by the lamp do not include infrared light, the recognition of speckle(s) is not greatly affected. At this time, the image collector 12 may directly acquire the second image, and the processor 40 directly calculates the depth image based on the second image and the reference image. In this way, the number of exposures of the image collector 12 may be reduced, and power consumption of the image collector 12 may be reduced.

Certainly, in some embodiments, the image collector 12 may also determine whether to perform the operation of acquiring the first image and the second image based on whether the brightness of the scene is greater than the brightness threshold. In detail, the processor 40 acquires the brightness of the scene and determines whether the brightness of the scene is greater than the brightness threshold. When the brightness is greater than the brightness threshold, the image collector 12 collects the first image and the second image.

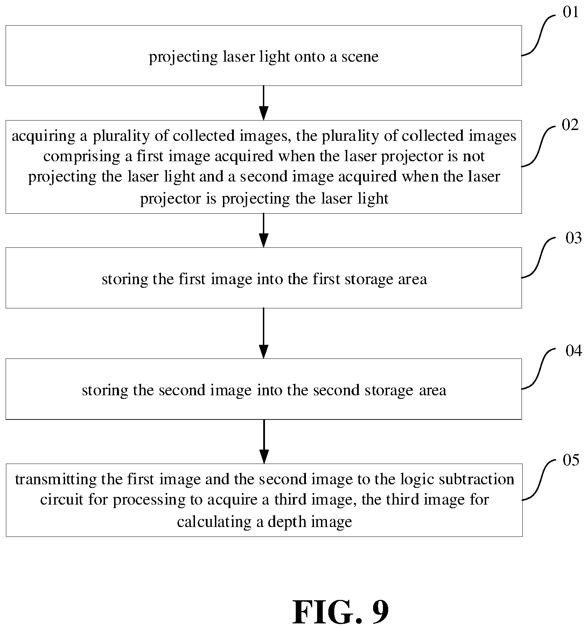

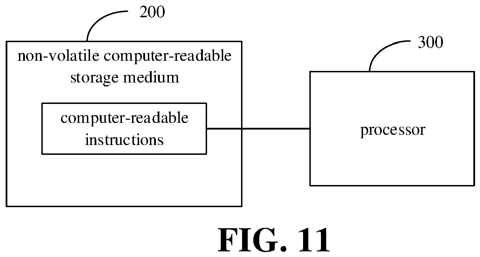

As illustrated by an example in FIG. 9, the disclosure also provides an image acquisition method. The image acquisition method is applicable for the depth camera 10 according to any one of the above embodiments. The image acquisition method can be performed by, for example, a processor such as a processor 300 according to FIG. 11. The image acquisition methods include the following.

At block 01, laser light is projected onto a scene.

At block 02, a plurality of collected images are acquired. The plurality of collected images includes a first image acquired when the laser projector 11 is not projecting the laser light and a second image acquired when the laser projector 11 is projecting the laser light.

At block 03, the first image is stored into the first storage area 71.

At block 04, the second image is stored into the second storage area 72.

At block 05, the first image and the second image are transmitted to the logic subtraction circuit 73 for processing to acquire a third image, the third image for calculating a depth image.

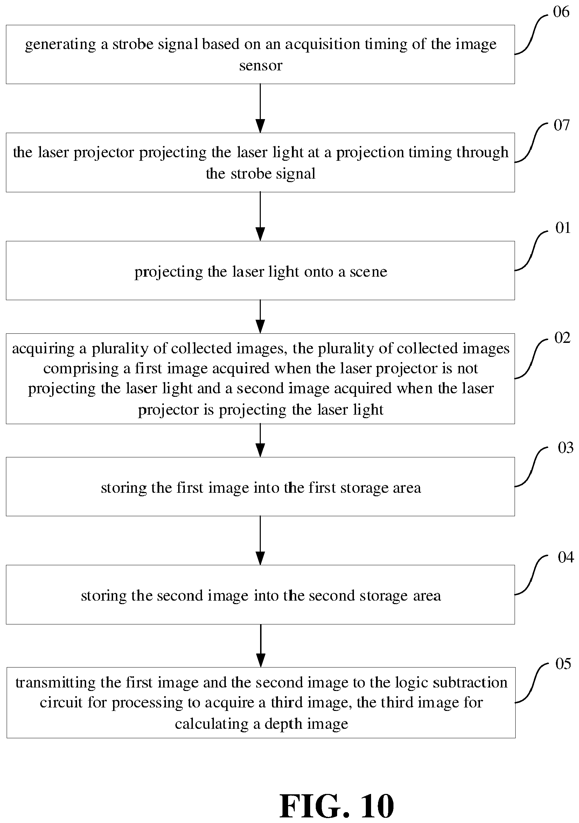

As illustrated in FIG. 10, in some embodiments, before the act at block 01, the image acquisition method includes the following.

At block 06, a strobe signal is generated based on an acquisition timing of the image sensor 121.

At block 07, the laser projector 11 is projecting the laser light at a projection timing through the strobe signal.

In some embodiments, before the act at block 01, in the image acquisition method, a brightness of the scene and a type of the scene are acquired, and the act at block 01 is performed when the brightness is greater than the brightness threshold and the type is an outdoor scene.

As illustrated in FIG. 11, the disclosure also provides a non-volatile computer-readable storage medium 200 with computer-readable instructions stored thereon. The computer-readable instructions are executed by the processor 300, so that the processor 300 executes the image processing method according to any one of the embodiments of the disclosure.

For example, in combination with FIG. 9, the computer-readable instructions are executed by the processor 300, so that the processor 300 performs the following.

At block 01, laser light is projected onto a scene.

At block 02, a plurality of collected images are acquired. The plurality of collected images includes a first image acquired when the laser projector 11 is not projecting the laser light and a second image acquired when the laser projector 11 is projecting the laser light.

At block 03, the first image is stored into the first storage area 71.

At block 04, the second image is stored into the second storage area 72.

At block 05, the first image and the second image are transmitted to the logic subtraction circuit 73 for processing to acquire a third image, the third image for calculating a depth image.

For example, as illustrated in FIG. 10, the computer-readable instructions are executed by the processor 300, so that the processor 300 performs the following.

At block 06, a strobe signal is generated based on an acquisition timing of the image sensor 121.

At block 07, the strobe signal is sent to the laser projector 11, and the strobe signal is configured to control the laser projector 11 to project the laser light at a projection timing through the strobe signal.

For example, the computer-readable instructions are executed by the processor 300, so that the processor 300 performs the following.

A brightness of the scene and a type of the scene are acquired, and the act at block 01 is performed when the brightness is greater than the brightness threshold and the type is an outdoor scene.

Reference throughout this specification to "an embodiment," "some embodiments," "an example," "a specific example," or "some examples," means that a particular feature, structure, material, or characteristic described in connection with the embodiment or example is included in at least one embodiment or example of the disclosure. The appearances of the above phrases in various places throughout this specification are not necessarily referring to the same embodiment or example of the disclosure. Furthermore, the particular features, structures, materials, or characteristics may be combined in any suitable manner in one or more embodiments or examples. In addition, different embodiments or examples and features of different embodiments or examples described in the specification may be combined by those skilled in the art without mutual contradiction.

Any process or method described in a flow chart or described herein in other ways may be understood to include one or more modules, segments or portions of codes of executable instructions for achieving specific logical functions or steps in the process, and the scope of a preferred embodiment of the disclosure includes other implementations, which should be understood by those skilled in the art.

Although embodiments of disclosure have been shown and described above, it should be understood that above embodiments are just explanatory, and cannot be construed to limit the disclosure, for those skilled in the art, changes, alternatives, and modifications can be made to the embodiments.

## Claims

1. A depth camera, comprising:
a laser projector, configured to project laser light onto a scene;
an image collector, comprising an image sensor, the image sensor being configured to execute a plurality of exposure operations, the image controller being configured to acquire a plurality of collected images corresponding to the plurality of exposure operations, the plurality of collected images comprising a first image acquired when the laser projector is not projecting the laser light and a second image acquired when the laser projector is projecting the laser light;
a first storage area, configured to store the first image;
a second storage area, configured to store the second image; and
a logic subtraction circuit, configured to process the first image and the second image to acquire a third image, the third image configured for calculating a depth image.

2. The depth camera of claim 1, wherein,
the first storage area, the second storage area, and the logic subtraction circuit are configured inside the image sensor.

3. The depth camera of claim 1, wherein,
the image collector further comprises a circuit board,
the image sensor is disposed on the circuit board, and
the first storage area, the second storage area, and the logic subtraction circuit are configured outside the image sensor and packaged with the image sensor on the circuit board.

4. The depth camera of any one of claims 1 to 3, wherein the image sensor is further configured to receive a first instruction, and execute the plurality of exposure operations in response to receiving the first instruction, the first instruction being configured to indicate that a brightness of the scene is greater than a threshold and a type of the scene meets a preset type.

5. The depth camera of any one of claims 1 to 4, wherein the image sensor is further configured to receive a second instruction, and execute one exposure operation in response to receiving the second instruction, the second instruction being configured to indicate that the brightness of the scene is less than or equal to the threshold and the type of the scene does not meet the preset type.

6. The depth camera of any one of claims 1 to 5, wherein the image sensor is further configured to generate a strobe signal based on an acquisition timing of the image sensor when the image sensor executes an exposure operation for a first time, and control a projection timing of the laser projector for projecting the laser light based on the strobe signal.

7. The depth camera of any one of claims 1 to 6, wherein the first image and the second image are acquired after the image sensor executes two consecutive exposure operations.

8. An electronic device, comprising:
a housing;
the depth camera of any one of claims 1 to 7, combined with the housing; and
a processor, configured to calculate the depth image based on the third image and a reference image.

9. The electronic device of claim 8, wherein, the first storage area, the second storage area, and the logic subtraction circuit are configured inside the processor.

10. The electronic device of claim 8 or 9, further comprising:
a visible-light camera, configured to collect a visible-light image in response to receiving a synchronization signal from the image sensor.

11. The electronic device of any one of claims 8 to 10, further comprising:
a flood light, wherein the image sensor is further configured to generate a second strobe signal based on an acquisition timing of the image sensor, and control an emission timing of the flood light for emitting light based on the second strobe signal.

12. A method for image acquisition, comprising:
acquiring and storing a first image when laser light is not projected;
acquiring and storing a second image when the laser light is projected; and
performing a subtraction on the first image and the second image to acquire a third image, the third image configured for calculating a depth image.

13. The method of claim 12, further comprising:
generating a first strobe signal based on an acquisition timing; and
alternating between projecting and not projecting the laser light based on the first strobe signal.

14. The method of claim 12 or 13, further comprising:
determining whether an ambient brightness is greater than a threshold and an ambient type meets a preset type;
acquiring and storing the first image and the second image, in response to a determination that that the ambient brightness is greater than the threshold and the ambient type meets the preset type; and
in response to a determination that at least one of that the ambient brightness is less than or equal to the threshold or the ambient type does not meet the preset type, acquiring and storing the second image, and taking the second image as the third image.

15. The method of any one of claims 12 to 14, wherein the first image and the second image are acquired at two consecutive exposure operations.
